# FASCICULE DE BREVET EUROPEEN

(11) **EP 2 130 139 B1**
(45) Date de publication et mention de la délivrance du brevet: **07.03.2018**
(21) Numéro de dépôt: 08718201.0
(22) Date de dépôt: 26.03.2008
(51) Int. Cl.: G06F 17/30

(54) **PROCEDE DE NAVIGATION PARMI DES ELEMENTS AFFICHES EN CREANT DES CHEMINS DE NAVIGATION ET APPAREIL POUR LA MISE EN UVRE DU PROCEDE**
VERFAHREN ZUM NAVIGIEREN ZWISCHEN ANGEZEIGTEN ELEMENTEN DURCH ERZEUGEN VON NAVIGATIONSWEGEN UND VORRICHTUNG ZUM IMPLEMENTIEREN DES VERFAHRENS
METHOD OF NAVIGATING AMONG DISPLAYED ELEMENTS BY CREATING NAVIGATION PATHS AND APPARATUS FOR IMPLEMENTING THE METHOD

(30) Priorité: 28.03.2007 FR 0754076
(43) Date de publication de la demande: 09.12.2009
(73) Titulaire: Thomson Licensing, 92130 Issy-les-Moulineaux (FR)
(72) Inventeur: PATRY, Nadine, F-35000 Rennes (FR); MORILLON, Gilles, F-35520 Melesse (FR); PRAT, Christophe, F-44000 Nantes (FR)
(74) Mandataire: de la Fouchardière, Marie-Noëlle
(86) Numéro de dépôt international: PCT/EP2008/053518
(87) Numéro de publication internationale: WO 2008/125436

(56) Documents cités:
- CRESCENZI V ET AL: "ROADRUNNER: towards automatic data extraction from large Web sites" PROCEEDINGS OF THE 27TH INTERNATIONAL CONFERENCE ON VERY LARGE DATA BASES MORGAN KAUFMANN PUBLISHING ORLANDO, FL, USA, [Online] 2001, pages 109-118, XP002460155 ISBN: 1-55860-804-4 Extrait de l'Internet: URL:http://www.vldb.org/conf/2001/P109.pdf > [extrait le 2007-11-27]
- NATSEV A ET AL: "Learning the semantics of multimedia queries and concepts from a small number of examples" 13TH ANNUAL ACM INTERNATIONAL CONFERENCE ON MULTIMEDIA ACM NEW YORK, NY, USA, 2005, pages 598-607, XP002460156 ISBN: 1-59593-044-2
- TOBIAS ANTON: "XPath-Wrapper Induction by generating tree traversal patterns" PROC. OF THE LWA 2005, LERNEN WISSENSENTDECKUNG ADAPTIVITÄT, SAARBRÜCKEN, [Online] 10 octobre 2005 (2005-10-10), - 12 octobre 2005 (2005-10-12) pages 126-133, XP002460158 Extrait de l'Internet: URL:http://www.dfki.de/lwa2005/fgml/paper0 2.pdf> [extrait le 2007-11-26]

## Description

L'invention concerne un procédé de navigation parmi des éléments représentés sur un écran et appareil conçu pour implémenter une interface de navigation.

Une interface utilisateur utilise des données descriptives associées à des documents multimédia pour élaborer des menus susceptibles d'être affichés sur l'écran de la télévision, permettant ainsi à l'utilisateur de choisir le document multimédia qu'il préfère. La demande de brevet FR96/09679 déposée par la demanderesse décrit un procédé de sélection de programmes de télévision et un dispositif intégrant une interface graphique permettant à l'utilisateur de naviguer dans des listes de programmes. Les menus permettent à l'utilisateur de connaître le contenu général d'une émission audiovisuelle et d'effectuer une sélection à partir des informations affichées. Les données descriptives associées aux différentes émissions diffusées sont appelées « informations de service » dans la norme relative au DVB-SI. Ces données sont diffusées sur le réseau et mémorisées dans une base de données locale, constamment mises à jour en fonction des documents accessibles sur le réseau. Les éléments de la base de données sont regroupés selon certains critères contenus dans les informations de service tels que : le thème, la langue, le niveau de moralité, ..etc. De cette façon, il est possible de classifier les données et les présenter d'une certaine façon à l'utilisateur.

On trouve des interfaces statiques qui présente les informations de la même manière quelque soit les commandes de l'utilisateur, et des interfaces dynamiques qui présenter les données en fonction des commandes introduites par l'utilisateur. Parmi ces interfaces, on peut citer la demande de brevet FR 00/06421 déposée le 19 mai 2000 déposée par la demanderesse. Cette demande décrit une navigation dans une arborescence dont les niveaux sont définis par des commandes de l'utilisateur. Les données peuvent être représentées par des imagettes ("Thumbnails" en Anglais) identifiants des documents, des photos par exemple, les imagettes défilant horizontalement. Un curseur dont les mouvements sont contrôlés par l'utilisateur, permet de pointer une imagette qui est alors graphiquement mise en évidence. L'introduction d'une commande d'activation déclenche la reproduction du document associé. La position des imagettes dans l'ordre de défilement dépend des données descriptives associées à ce document. Grâce au défilement, l'écran donne l'impression à l'utilisateur que les imagettes défilent sur la surface d'un cylindre. D'autres commandes permettent de modifier la vitesse de défilement, de changer les critères de classification et de positionnement des documents affichés, et de sélectionner une imagette afin de reproduire le document associé.

Lorsqu'un grand nombre d'éléments sont accessibles, il est nécessaire d'effectuer des classements préalables afin de sélectionner un sous-ensemble d'éléments et de naviguer dans ce sous-ensemble. Grâce aux données descriptives associées, les éléments sont organisés en une arborescence hiérarchique. L'utilisateur navigue au sein des niveaux de l'arborescence en sélectionnant les critères qui l'intéresse. De cette façon, l'utilisateur peut définir la taille et les critères de classification du sous-ensemble dans lequel il veut naviguer.

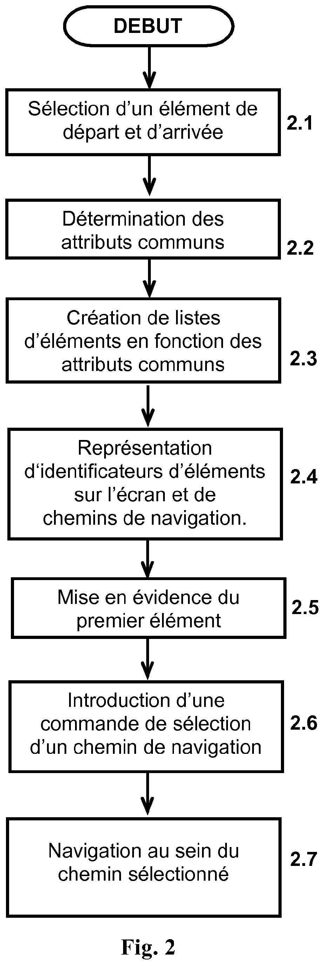

Le document « Road Runner : Towards Automatic Data Extraction from Large Web Sites de Valter CRESCENZI et Al, publié en 2001 décrit une méthode pour naviguer dans une structure arborescente de page HTML ou XML. On part d'un document qui constitue un noeud et on descend dans l'arborescence niveau par niveau. Un ou plusieurs choix sont offerts à chaque niveau. Comme le montre la figure 2, Il est possible de revenir au noeud initial en parcourant l'arborescence.

L'invention propose un nouveau concept d'interface qui offre une navigation et des possibilités de recherche de documents multimédias plus performantes et conviviales pour un utilisateur.

L'invention a pour objet un procédé de navigation dans un ensemble d'éléments, ces éléments étant associés à des valeurs d'attributs fixés par des critères de classification ; caractérisé en ce qu'il comporte les étapes :
- sélection de deux éléments considérés comme l'élément de départ et l'élément d'arrivée et détermination d'attributs communs aux deux éléments sélectionnés,
- élaboration d'autant de listes d'éléments que d'attributs communs aux éléments de départ et d'arrivée, tous les éléments d'une liste ayant le même attribut pris dans les attributs communs,
- affichage de chemins graphiques représentant chaque liste en reliant graphiquement entre eux les éléments, les extrémités de chaque chemin étant les éléments de départ et d'arrivée,
- navigation dans l'ensemble des chemins consistant à mettre graphiquement en évidence l'élément de départ, à recevoir un signal de sélection d'un des chemins graphique, et à recevoir des commande de navigation déclenchant le déplacement d'une distinction graphique sur chaque identificateur d'élément présent sur le chemin graphique sélectionné.

De cette façon, le procédé propose à l'utilisateur une nouvelle façon de naviguer sur un ensemble d'éléments basée sur la sélection préalable de deux éléments et sur la détermination de plusieurs chemins de navigation. L'utilisateur dirige sa navigation sur un écran de visualisation en sélectionnant un chemin qui part d'un premier élément afin d'atteindre un second élément.

Selon un premier perfectionnement, les éléments des listes sont ordonnés selon un critère de classification. De cette façon, l'utilisateur navigue plus facilement dans la liste affichée et peut rechercher plus efficacement un élément. Selon un perfectionnement, les éléments des listes sont sélectionnés selon un ou plusieurs critères de classification pour que l'élément de départ et l'élément d'arrivée se situent au début et à la fin de la liste ordonnée. De cette façon, l'utilisateur se rend mieux compte de la logique de la navigation consistant à partir d'un élément pour atteindre un élément d'arrivée en parcourant une liste ordonnée d'éléments.

Selon un perfectionnement, le procédé comporte une étape d'élaboration d'une pluralité de sous-listes d'éléments correspondant à des sous-attributs d'un des attributs communs, les sous-listes ainsi élaborées étant affichées. De cette façon, on peut afficher des sous-listes décrivant mieux les éléments d'une liste correspondant à un attribut commun aux éléments de départ et d'arrivée

Selon un autre perfectionnement, l'utilisateur introduit une commande de sélection d'un élément de départ et/ou d'un élément d'arrivée. De cette façon, c'est l'utilisateur qui choisit lui-même les éléments qui vont ensuite permettre de définir les chemins de navigation. Selon une variante, c'est l'appareil qui sélectionne l'élément de départ et l'élément d'arrivée en prenant en compte le profil de l'utilisateur.

Selon un autre perfectionnement, la réception d'une commande de navigation déclenche un déplacement des chemins graphiques afin que la distinction graphique mettant en évidence l'élément courant reste dans une même zone de l'affichage. De cette façon, l'élément courant est d'avantage mis en évidence car il se situe toujours dans une zone déterminée de l'affichage où l'utilisateur peut facilement le trouver. Selon un autre perfectionnement, l'accès au dernier élément lors de la navigation déclenche une nouvelle étape de sélection d'un élément de départ et un élément d'arrivée et une nouvelle étape de détermination de listes d'éléments. De cette façon, une nouvelle interface graphique est automatiquement élaborée, permettant ainsi de naviguer et éventuellement rechercher un élément qui n'aurait pas été trouvé dans une précédente interface graphique.

Selon un autre perfectionnement, l'étape d'affichage de chemins graphiques comporte une étape de représentation de tous les identificateurs proches de l'élément courant, les autres identificateurs d'éléments n'étant pas individuellement représentés. De cette façon, si de nombreux éléments existent dans une liste, seuls ceux proches de l'élément graphiquement mis en évidence sont représentés dans le signal d'affichage. Selon un autre perfectionnement, les éléments sont placés dans le signal d'affichage en fonction des valeurs d'attributs associés à chacun d'eux, les chemins sont ensuite élaborés graphiquement de façon à relier les éléments d'une même liste pour représenter un chemin. De cette façon, la position de chaque élément dans le signal d'affichage est représentative du document associé, les chemins étant avantageusement représentés par des liens graphiques reliant les éléments d'une même liste.

L'invention a également pour objet un appareil électronique comprenant un moyen de génération d'un signal d'affichage d'un menu présentant des identificateurs d'éléments extraits d'un ensemble d'éléments présents dans une base de données, et un moyen de réception de commandes permettant de contrôler le déplacement d'un curseur sur un écran de visualisation connecté au moyen de génération d'un signal d'affichage ; caractérisé en ce qu'il comporte un moyen de sélection de deux éléments considérés comme l'élément de départ et l'élément d'arrivée, le moyen de génération d'un signal d'affichage affichant autant de listes d'éléments que d'attributs communs aux éléments de départ et d'arrivée, tous les éléments d'une liste ayant le même attribut pris dans les attributs communs, les listes d'éléments étant affichées par des chemins graphiques dont les extrémités sont graphiquement reliés aux éléments de départ et d'arrivée, le moyen de réception de commandes permettant la sélection d'un chemin et la navigation au sein du chemin sélectionné à partir de l'élément de départ.

D'autres caractéristiques et avantages de l'invention apparaîtront à travers la description d'un exemple de réalisation particulier décrit en référence aux dessins parmi lesquels :
- la figure 1 est un diagramme bloc d'un terminal multimédia pour la mise en oeuvre de l'invention,
- la figure 2 est un organigramme des principales étapes du procédé selon un exemple préféré de réalisation de l'invention,
- la figure 3 est un exemple d'apparence d'écran généré par le système de navigation comprenant six chemins,
- la figure 4 est un exemple d'apparence d'écran généré par le système de navigation selon une variante de réalisation de l'invention,
- la figure 5 est un exemple d'apparence d'écran généré par le système de navigation montrant des chemins reliant des identificateurs placés préalablement sur un espace graphique.

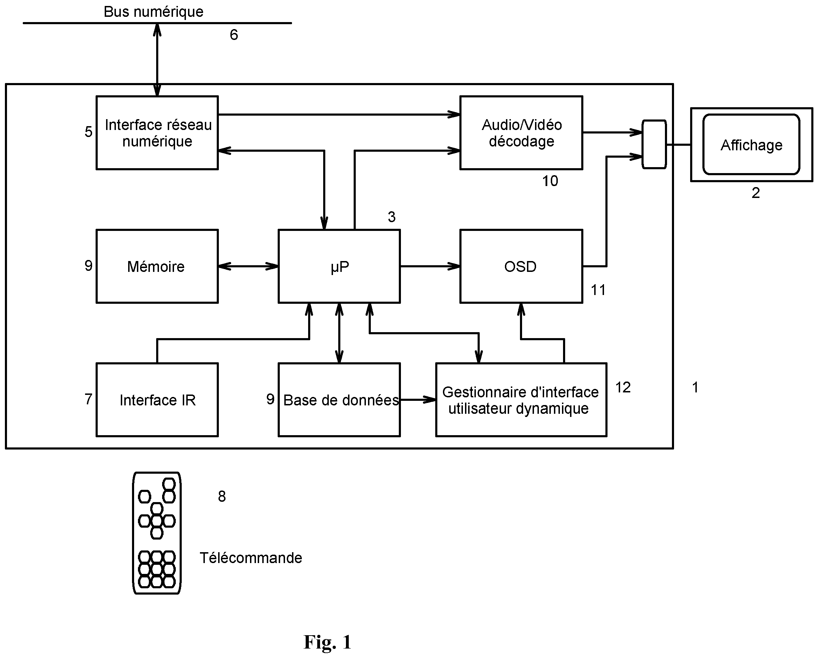

A l'aide de la figure 1, on décrira tout d'abord le fonctionnement d'un terminal 1 muni d'un dispositif d'affichage 2. Le terminal 1 comprend une unité 3 centrale reliée à une mémoire de programme 4, et une interface 5 pour la communication avec un réseau numérique à haut débit 6 permettant de transmettre des données audio/vidéo en temps réel. Ce réseau est par exemple un réseau d'IEEE 1394. Le terminal comprend en outre un récepteur de signaux infrarouge 7 pour recevoir les signaux d'une télécommande 8, une mémoire 9 pour le stockage d'une base de données, et une logique de décodage audio/vidéo 10 pour la création des signaux audiovisuels envoyés à l'écran de télévision 2. La télécommande est dotée des touches de navigation ↑, ↓, → et ←, d'un pavé numérique et d'une touche « OK ». Des télécommandes de type Gyration, dotée de capteurs de mouvement sont également utilisables.

Le terminal comprend également un circuit 11 d'affichage de données sur l'écran, appelé souvent circuit OSD, de l'anglais "On Screen Display" (signifiant littéralement "affichage sur l'écran"). Le circuit OSD 11 est un générateur de texte et de graphisme qui permet d'afficher à l'écran des menus, des pictogrammes (par exemple, un numéro correspondant à la chaîne visualisée) et qui permet d'afficher les menus de navigation conformément à la présente invention. Le circuit OSD reçoit des informations de l'Unité Centrale et d'un module appelé « Navigateur » 12. Le Navigateur est avantageusement réalisé sous la forme d'un module de programme enregistré dans une mémoire morte.

Les documents multimédia que le terminal 1 peut reproduire sont des documents audiovisuels, des documents sonores, ou des photos. Le bus numérique 6 transmet au terminal 1 des données comprenant des documents multimédias et des données descriptives de ces documents. Les données descriptives, appelés également « métadonnées » (« metadata » en Anglais), comprennent les attributs des documents multimédias accessibles par le bus numérique. Elles sont stockées dans la base de données de la mémoire 9 du terminal et sont continuellement mises à jour lors des nouvelles réceptions. Le Navigateur extrait ensuite les informations de cette base de données et les traite pour réaliser les menus de navigation affichés à l'écran et proposés à l'utilisateur.

Dans l'exemple qui suit, les documents multimédias sont classés selon différents critères, voici ci-après des exemples de critères de classification et leurs valeurs d'attributs associés permettant de classer des documents dans des listes :
- Langue: anglais, français, allemand, italien, arabe, autres
- Thème : film, information , documentaire, sport, jeu/spectacle.
   second niveau du thème (sous-attribut associé) : le sous-thème :
   - film : {aventure, drame, érotique, policier, fiction, autres}
   - information : {journal, radio, météo, Bourse, sport, autre}
   - documentaire : {général, nature, culture, social, histoire}
   - jeu/spectacle : {général, variété, cirque, Talk Show, cirque, théâtre}
   - sport : {Général, foot, tennis, basket, athlétisme, nautique}
   - ...
- Source : TPS, Canal Satellite, DVD salon, magnétoscope, Web.
- Moralité : 0 (tout public), 1,....,3 (pornographique).
- Média: audio, vidéo, image, texte,
- ancienneté du document, mesurée par exemple pas sa date de création.

Ces critères permettent de classifier les documents disponibles à partir du terminal 1 et d'élaborer des listes en sélectionnant un ou plusieurs critères, ces listes pouvant être ordonnées.

La classification de chaque document s'effectue en fonction des attributs associés à chaque critère de classification. Certains attributs sont de nature numérique (le critère de moralité, l'ancienneté du document, ...). En toute rigueur, il est possible d'affecter une valeur numérique à chaque attribut par une convention. Par exemple, chaque attribut de thème d'un film est associé aux valeurs suivantes : « aventure » est affectée à la valeur 1, « drame» est affectée à la valeur 2, « érotique, » est affectée à la valeur 3, « policier, » est affectée à la valeur 4, etc. Avantageusement, l'affectation à une valeur est réalisée par le diffuseur. Grâce aux valeurs d'attribut (valeurs numériques ou non) qui leur sont affectées, les documents peuvent être rangés dans une liste ordonnée. Les documents audiovisuels sont des exemples d'éléments utilisés pour la navigation, mais tout autre élément susceptible d'être représenté par un identificateur sur un écran et d'être associé à un critère de classification peut être utilisé par la présente invention.

Nous allons maintenant détailler les étapes d'un exemple préféré de réalisation de l'invention, avec l'aide de la figure 2. Selon un mode préféré de réalisation, un document de départ et un document d'arrivée sont d'abord choisis (étape 2.1), puis le navigateur détermine les critères de classification en fonction des attributs communs aux deux documents.

A l'étape 2.2, le Navigateur analyse tous les attributs associés au document de départ et au document d'arrivée et détermine les attributs communs. Si les deux documents ne possèdent pas d'attributs en commun, il n'est pas possible d'élaborer de chemin, et d'autres documents doivent être choisis. Supposons dans la suite que les documents de départ et d'arrivée possèdent deux attributs en commun : par exemple, ces documents sont diffusés par le même canal de diffusion et ce sont des films.

A l'étape 2.3, le Navigateur élabore autant de listes d'éléments que d'attributs communs aux éléments de départ et d'arrivée. Selon notre exemple, le navigateur sélectionne une partie ou la totalité des documents qui sont diffusés par le même canal que les documents de départ et d'arrivée, et sélectionne une partie ou la totalité des documents qui sont des films. Le Navigateur crée deux listes de documents dont les éléments ont le même attribut pris dans les attributs communs. Dans l'exemple cité plus haut, le Navigateur élabore une première liste de documents qui sont des films, et une seconde liste de documents qui sont diffusés sur le même canal que les documents de départ et d'arrivée. On peut trouver des documents communs aux deux listes, c'est le cas si le canal de diffusion diffuse un troisième film.

Selon un mode simple de réalisation, les documents sélectionnés sont mis dans la liste de façon aléatoire. De cette façon, chaque fois que le navigateur élabore une nouvelle représentation de navigation, l'utilisateur naviguera sur de nouvelles listes. Selon un perfectionnement, chaque liste est ordonnée selon un ou plusieurs critères de classification. Ces critères sont différents de ceux dont les attributs sont communs aux documents de départ et d'arrivée. Les documents de départ et d'arrivée deviennent les extrémités des listes ordonnées de documents, de sorte que le navigateur opère une sélection pour élaborer ces listes pour que les documents de la liste se situent entre les documents de départ et d'arrivée. Par exemple, on peut choisir le moment de diffusion. Supposons que le document de départ soit diffusé à 9h00 et le document d'arrivée à 17h00. La première liste comporte alors des films diffusés entre 9h00 et 17h00 sur n'importe quel canal en les ordonnant selon l'heure de diffusion. La seconde liste comporte des documents diffusés sur le même canal que les documents de départ et d'arrivée selon également l'ordre de diffusion. Une variante consiste en ce que les listes n'utilisent pas le même critère de classification pour s'ordonner. Par exemple, il est possible de classer les films de la première liste selon le contrôle parental ou le thème, et laisser les documents de la seconde liste par ordre chronologique.

De cette manière, la navigation dans une liste de documents présente une logique qui permet à un utilisateur de rechercher plus facilement un document déterminé. Les listes élaborées permettent de partir de l'élément de départ vers d'autres éléments en gardant un attribut en commun, l'utilisateur choisit un des attributs et décide de naviguer dans la liste correspondante. Si le nombre d'éléments d'une liste est important, un second critère peut être associé au premier afin d'en réduire le nombre. Par exemple, la première liste (celle des films) peut concerner les documents de type film avec un contrôle parental égal à 0 (tout public).

Puis, le navigateur positionne à l'écran les identificateurs des documents ainsi que les chemins de navigation (étape 2.4). Les identificateurs peuvent être de simple croix, ou un petit symbole graphique précisant par exemple si c'est un document audiovisuel, un document sonore, ou une photo. Les identificateurs de ces deux documents de départ et d'arrivée sont avantageusement placés en des points éloignés de façon que les chemins graphiques soient le plus long possible et contiennent un nombre important d'identificateurs. Le navigateur affiche également une représentation graphique des listes créées à l'étape 2.3. Pour cela, le navigateur crée des liens graphiques entre chaque identificateur affiché. Un moyen simple de représentation du lien graphique est la proximité. Ainsi, le chemin est tracé à l'écran par les identificateurs, la longueur du chemin variant en fonction du nombre d'éléments de la liste. S'il y a peu d'éléments, une ligne droite est préférable, et il n'y a pas besoin de liens graphiques entre les éléments, dans le cas contraire le navigateur place les identificateurs pour former une ligne sinueuse qui est alors représentée graphiquement. Si les identificateurs sont disséminés à l'écran, le chemin est clairement représenté en les reliant par un trait. Grâce aux traits reliant chaque identificateur à son suivant et son précédent, l'utilisateur identifie immédiatement vers quel éléments il peut naviguer. Les identificateurs des éléments de départ et d'arrivée sont mis graphiquement en évidence par une distinction graphique, par exemple par un soulignement, une couleur spéciale ou un encadrement spécifique. Le navigateur termine l'élaboration de la première page en marquant le premier élément par un clignotement par exemple (étape 2.5). Cette marque signifie que c'est l'élément courant, elle se déplacera ensuite d'identificateurs en identificateurs selon les commandes de navigation.

La disposition des identificateurs à l'écran et les liens graphiques montre à l'utilisateur une pluralité de chemins possibles permettant d'aller du document de départ au document d'arrivée. Si une liste contient trop d'identificateurs pour les afficher tous, alors seule une partie est affichée, un lien graphique en pointillé représente la partie non affichée. Lorsque la distinction graphique s'applique à des éléments proches d'un lien en pointillé, le Navigateur fait apparaître tous les documents initialement cachés. Réciproquement, dans un autre endroit de la liste situé loin de la distinction graphique, le Navigateur fait disparaître des documents et les remplace par un lien graphique en pointillé.

A l'étape 2.6 l'utilisateur introduit une première commande de navigation avec une des touches de navigation de la télécommande. A partir du document de départ, tous les chemins de navigation sont possibles. Si deux chemins existent, le navigateur a pris soin à l'étape 2.4 de faire démarrer un des chemins à droite du premier document, et l'autre chemin à gauche du premier document. De cette façon, l'utilisateur sélectionne un chemin en introduisant une première commande consistant à aller soit vers la droite (touche de navigation droite : →), soit vers la gauche (touche de navigation gauche : ←). S'il y a plus de deux chemins, il faut appuyer plusieurs fois à droite ou à gauche pour sélectionner le bon.

Ensuite, la navigation s'effectue au sein d'une même liste avec les touches ↑ et ↓ (étape 2.7). Ces commandes permettant d'avancer vers le dernier document ou de reculer en direction du premier document. Lors de chaque commande, un nouvel élément sélectionné, appelé « élément courant ». Comme on l'a dit précédemment, il est graphiquement mis en évidence par un clignotement. Un changement de liste n'est possible que si le document courant (sur lequel se trouve la distinction graphique) est un des deux documents de départ ou d'arrivée. La description qui précède n'est qu'un exemple, on peut disposer les identificateurs du premier et le dernier document à l'extrême gauche et à l'extrême droite de l'écran. Dans ce cas, les chemins de navigation démarrent vers le haut et vers le bas, donc la première commande permettant de sélectionner une sous liste est soit la touche ↑ soit la touche ↓.

Lorsque la navigation atteint un des deux documents de départ ou d'arrivée, le Navigateur propose à l'utilisateur de changer l'autre document. Une fenêtre s'ouvre permettant à l'utilisateur d'introduire le titre du document. Une fois le nouveau document introduit, le Navigateur exécute de nouveau les étapes 2.2 à 2.5 et affiche de nouveaux chemins de navigation.

Selon un mode préféré de réalisation, l'utilisateur choisit les documents de départ et d'arrivée à l'étape 2.1. Une autre façon de sélectionner deux documents consiste à utiliser le profil utilisateur et à choisir comme premier document celui que l'utilisateur apprécie le plus, et comme second celui que l'utilisateur a le moins de chances d'apprécier.

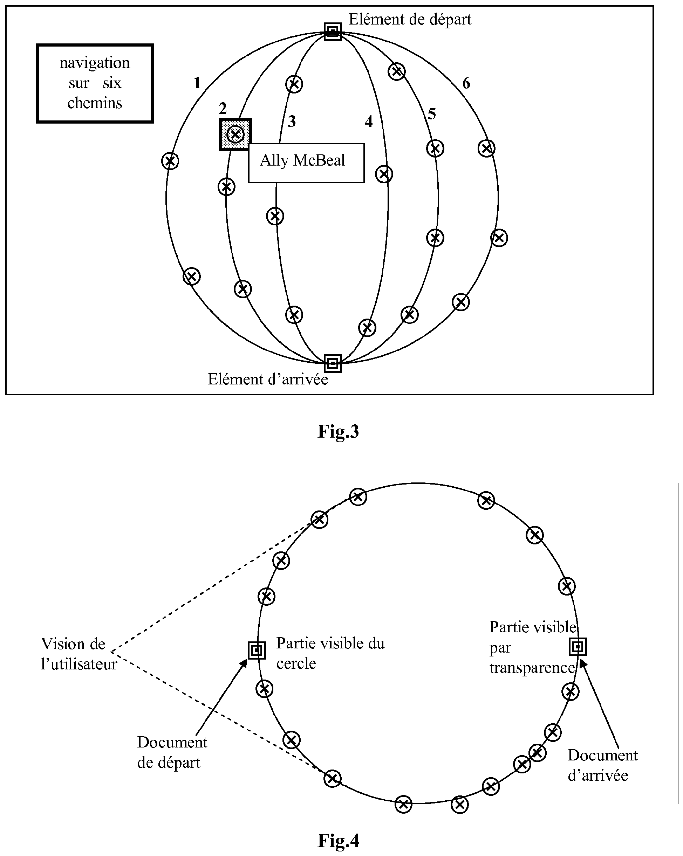

La figure 3 illustre un autre exemple de représentation de navigation avec six chemins en utilisant des sous-critères de classification. Si le document de départ et le document d'arrivée ne comporte qu'un seul attribut commun, il est intéressant d'utiliser des sous-attributs pour présenter plus d'un chemin. La figure 3 montre deux documents de départ et d'arrivée possédant un seul attribut en commun, cet attribut est associé à six sous-attributs définis par un sous-critères de classification. Typiquement, l'attribut « film » du type d'un document comporte le sous-critère « thème » qui présente six sous-attributs : aventure, drame, érotique, policier, fiction, autres. On voit sur la figure 3 que chaque chemin est représenté comme un méridien sur la surface d'une sphère, les documents de départ et d'arrivée étant placés au niveau des pôles. Dans l'exemple, le navigateur associe un thème à chaque chemin, les six chemins contiennent respectivement des films d'aventure, des drame, des films érotiques, des films policier, des fictions, et des films n'entrant dans aucune des cinq première catégorie. Le navigateur place l'identificateur du document de départ tout en haut de l'écran. L'identificateur du document d'arrivée est placé tout en bas de l'écran. Le choix d'un chemin s'effectue en appuyant sur des touches du pavé numérique de 1 à 6, chaque chemin étant associé à un chiffre. Une fois que l'utilisateur a appuyé sur 2 par exemple pour sélectionner la liste des drames, le second élément de cette seconde liste est sélectionné et mis graphiquement en évidence. Ensuite, l'utilisateur navigue au sein de cette liste à l'aide des touches ↑ et ↓. Si le document sélectionné est accessible, la touche « OK » permet de lancer sa reproduction. Il est également possible d'afficher des listes associées à un attribut commun, et des sous-listes remplaçant une liste en présentant les sous-attributs de l'attribut de la liste remplacée. Ces sous-listes présentent un aspect graphique différent des listes principales.

La figure 4 illustre une autre variante consistant à présenter deux chemins dont les constituants graphiques (les identificateurs et les liens) changent de position chaque fois qu'une commande de navigation est introduite. Dans l'exemple illustré par la figure 4, les deux chemins occupent chacun un demi-cercle, composant un cercle dont une moitié est visible distinctement et l'autre moitié apparaît moins soutenue à l'écran. Cette façon de représenter donne l'impression que l'utilisateur navigue sur un anneau avec une face visible et l'autre visible par transparence à travers la première. Au départ, le premier document est au centre de l'écran, les chemins partant à gauche et à droite. En choisissant un chemin, l'utilisateur fait tourner le cercle, l'identificateur du document courant est toujours placé au centre de l'écran. A l'aide des touches de navigation → ou ←, le cercle tourne de droite à gauche ou de gauche à droite, l'ensemble des identificateurs de la face visible se déplaçant dans un sens, et ceux de l'autre face se déplaçant dans l'autre sens. Au bout d'un certain nombre de commandes de navigation, le premier document atteint un bord et disparaît de la face visible tandis que le dernier document apparaît alors sur le bord opposé.

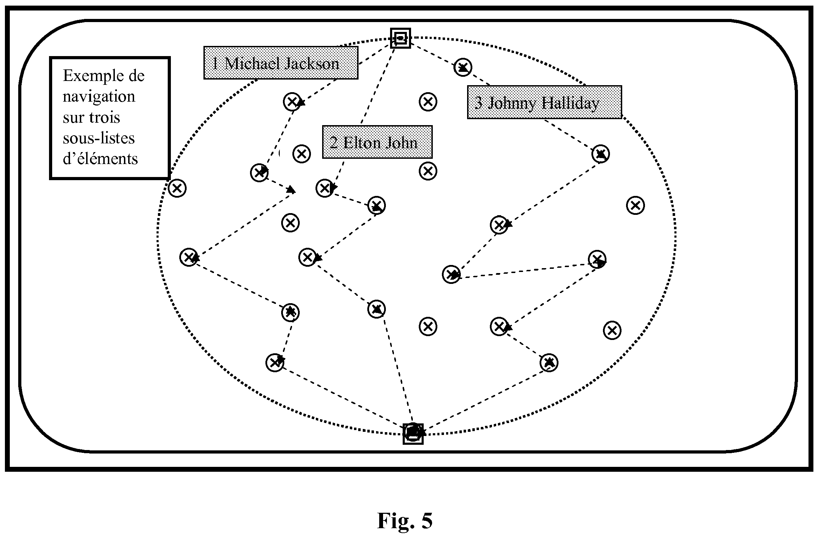

Les figures 3 et 4 illustrent des interfaces dont les chemins graphiques présentent un tracé géométrique régulier. Selon une variante illustrée par la figure 5, les identificateurs sont d'abord placés sur l'écran à l'aide de paramètres de bas niveau permettant une projection sur un plan, et ensuite les chemins sont élaborés et représentés graphiquement. Le placement préalable des identificateurs de documents permet d'effectuer des regroupements selon certains critères. Prenons par exemple, un lecteur MP3 de contenus audio doté d'un grand écran graphique, de nombreux documents sont disponibles. L'exploitation des paramètres de bas niveau permet de placer les identificateurs des contenus audio selon leurs caractéristiques acoustiques, par exemple les morceaux vocaux, ou la musique techno, ou la musique classique forment trois groupes distincts à l'écran. Selon l'exemple de la figure 5, un seul paramètre commun existe entre les deux documents : ce sont des chansons. Le Navigateur élabore des sous-listes en fonction du chanteur. Dans l'exemple illustré, trois chanteurs sont sélectionnés et leurs chansons constituent des sous-listes d'éléments. Le navigateur affiche trois chemins permettant de naviguer dans les trois listes de chansons. A partir du document de départ, l'utilisateur appuie sur la touche 1, 2 ou 3, pour sélectionnes un chanteur, et donc une sous-liste. Avantageusement, le nom de chaque chanteur est affiché à coté du chemin, permettant ainsi à l'utilisateur d'identifier chaque chemin. La figure 5 représentant le premier et le dernier document respectivement en haut et en bas. De ce fait les liens de navigation entre chaque contenu audio vont du haut vers le bas, et les commandes de navigation sur un chemin donné sont activées à l'aide des touches ↑ et ↓.

Selon un perfectionnement, les éléments représentés sur un chemin consituent une « playlist » ordonnée. Une « playlist » est une suite de documents audio et/ou vidéo qui sont reproduits automatiquement les uns à la suite des autres. Selon ce perfectionnement, une fois que l'utilisateur a choisi un chemin, le premier élément du chemin est reproduit, puis le second jusqu'à ce que le navigateur atteigne le dernier élément. Si le document est affichable, la représentation du menu de navigation est réduite et placé dans un coin de l'écran. De cette façon, l'utilisateur peut facilement se rendre compte de l'endroit où se situe l'élément en cours de reproduction, et le nombre de documents qu'il reste à reproduire sur ce chemin.

Il est important de noter que l'interface utilisateur qui vient d'être décrite peut être utilisée dans tout terminal multimédia dans la mesure où ce terminal possède des capacités audio et vidéo suffisamment performantes pour permettre à un utilisateur de voir et/ou d'entendre des documents multimédias.

## Revendications

1. Procédé de navigation dans un ensemble d'éléments, ces éléments étant associés à des valeurs d'attributs fixés par des critères de classification ; ledit procédé comprenant les étapes :
- sélection (2.1) de deux éléments considérés comme l'élément de départ et l'élément d'arrivée et détermination (2.2) d'attributs communs aux deux éléments sélectionnés,
- élaboration (2.3) d'autant de listes d'éléments que d'attributs communs aux éléments de départ et d'arrivée, tous les éléments d'une liste ayant le même attribut pris dans les attributs communs,
- affichage (2.4) de chemins graphiques représentant chaque liste en reliant graphiquement entre eux les éléments, les extrémités de chaque chemin étant graphiquement reliées aux éléments de départ et d'arrivée,
- navigation dans l'ensemble des chemins (2.6, 2.7) consistant à mettre graphiquement en évidence l'élément de départ, à recevoir un signal de sélection d'un des chemins graphique, et à recevoir des commande de navigation déclenchant le déplacement au sein du chemin graphique sélectionné à partir de l'élément de départ.

2. Procédé de navigation selon la revendication 1 ; **caractérisé en ce que** les éléments des listes sont ordonnées sur chaque chemin graphique selon un critère de classification.

3. Procédé de navigation selon la revendication 2 ; **caractérisé en ce que** les éléments des listes sont sélectionnés selon un ou plusieurs critères de classification pour que l'élément de départ et l'élément d'arrivée se situent au début et à la fin de la liste ordonnée.

4. Procédé de navigation selon l'une quelconque des revendications 1 à 3 ; **caractérisé en ce que** l'étape de sélection de l'élément de départ et de l'élément d'arrivée prend en compte le profil d'un utilisateur.

5. Procédé de navigation selon l'une quelconque des revendications précédentes ; **caractérisé en ce que** la réception d'une commande de navigation déclenche un déplacement des chemins graphiques afin que la distinction graphique mettant en évidence l'élément courant reste dans une même zone de l'affichage.

6. Procédé de navigation selon l'une quelconque des revendications précédentes ; **caractérisé en ce que** l'arrivée au dernier élément après une navigation sur une liste déclenche une nouvelle étape de sélection (2.1) d'un élément d'arrivée, l'ancien élément d'arrivée devant l'élément de départ.

7. Procédé de navigation selon l'une quelconque des revendications précédentes ; **caractérisé en ce que** l'étape d'affichage (2.4) consiste à placer sur le moyen de visualisation (2) les éléments à des positions qui dépendent des valeurs d'attributs associés à chacun d'eux, les chemins sont ensuite graphiquement représentés de façon à relier les éléments d'une même liste.

8. Appareil électronique (1) comprenant un moyen de génération d'un signal d'affichage (3, 10) d'un menu présentant des identificateurs d'éléments extraits d'un ensemble d'éléments présents dans une base de données (9), un moyen de réception de commandes (7,8) permettant de contrôler le déplacement d'un curseur sur un écran de visualisation connecté au moyen de génération d'un signal d'affichage (3, 10) ; un moyen de sélection de deux éléments considérés comme l'élément de départ et l'élément d'arrivée, le moyen de génération d'un signal d'affichage (3, 10) affichant autant de listes d'éléments que d'attributs communs aux éléments de départ et d'arrivée, tous les éléments d'une liste ayant le même attribut pris dans les attributs communs aux éléments de départ et d'arrivée, les listes d'éléments étant affichées par des chemins graphiques dont les extrémités sont graphiquement reliées aux éléments de départ et d'arrivée, le moyen de réception de commandes (7,8) permettant la sélection d'un chemin et la navigation au sein du chemin sélectionné à partir de l'élément de départ mis graphiquement en évidence.

9. Appareil électronique (1) selon la revendication 8 ; **caractérisé en ce que** le moyen de génération d'un signal d'affichage (3, 10) place les éléments des listes sur chaque chemin graphique en les ordonnant selon un critère de classification.

10. Appareil électronique (1) selon la revendication 9 ; **caractérisé en ce que** le moyen de génération d'un signal d'affichage (3, 10) place les éléments de chaque liste selon un ou plusieurs critères de classification de façon que l'élément de départ et l'élément d'arrivée se situent au début et à la fin de la liste ordonnée.

11. Appareil électronique (1) selon l'une quelconque des revendications 8 à 10 ; **caractérisé en ce que** le moyen de sélection de l'élément de départ et de l'élément d'arrivée prend en compte le profil d'un utilisateur.

12. Appareil électronique (1) selon l'une quelconque des revendications 8 à 11 ; **caractérisé en ce que** le moyen de réception de commandes (7,8) déclenche un déplacement des chemins graphiques afin que la distinction graphique mettant en évidence l'élément courant reste dans une même zone de l'affichage.

13. Appareil électronique (1) selon l'une quelconque des revendications 8 à 12 ; **caractérisé en ce que** l'arrivée au dernier élément après une navigation sur une liste active le moyen de sélection, le moyen de sélection déterminant un nouvel élément d'arrivée, l'ancien élément d'arrivée devant l'élément de départ.

14. Appareil électronique (1) selon l'une quelconque des revendications 8 à 13 ; **caractérisé en ce que** le moyen de génération d'un signal d'affichage (3, 10) place les éléments à des positions qui dépendent des valeurs d'attributs associés à chacun d'eux, les chemins sont ensuite graphiquement représentés de façon à relier les éléments d'une même liste.

## Patentansprüche

1. Verfahren zur Navigation in einer Gesamtheit von Elementen, wobei diese Elemente verbunden sind mit Werten von Attributen, die durch Klassifikationskriterien festgelegt sind; wobei das Verfahren die Schritte umfasst:
- Auswahl (2.1) von zwei Elementen, die als das Ausgangselement und das Ankunftselement betrachtet werden, und Bestimmung (2.2) von für die zwei ausgewählten Elemente gemeinsamen Attributen,
- Erstellung (2.3) von so vielen Listen von Elementen wie von Attributen, die den Ausgangs- und Ankunftselementen gemeinsam sind, wobei alle Elemente einer Liste dasselbe Attribut haben, das in die gemeinsamen Attribute aufgenommen wurde,
- Anzeige (2.4) von grafischen Pfaden, die jede Liste darstellen, mit grafischer Verknüpfung der Elemente miteinander, wobei die Enden von jedem Pfad grafisch mit den Ausgangs- und Ankunftselementen verknüpft sind,
- Navigation in der Gesamtheit der Pfade (2.6, 2.7), die darin besteht, das Ausgangselement grafisch hervorzuheben, ein Signal zur Auswahl eines der grafischen Pfade zu erhalten, und Navigationsbefehle zu erhalten, die die Verlagerung innerhalb des aus dem Ausgangselement ausgewählten grafischen Pfades auslösen.

2. Verfahren zur Navigation nach Anspruch 1, **dadurch gekennzeichnet, dass** die Elemente der Listen auf jedem grafischen Pfad nach einem Klassifikationskriterium angeordnet sind.

3. Verfahren zur Navigation nach Anspruch 2, **dadurch gekennzeichnet, dass** die Elemente der Listen nach einem oder mehreren Klassifikationskriterien ausgewählt werden, damit das Ausgangselement und das Ankunftselement sich am Anfang und am Ende der angeordneten Liste befinden.

4. Verfahren zur Navigation nach einem der Ansprüche 1 bis 3, **dadurch gekennzeichnet, dass** der Schritt zur Auswahl des Ausgangselements und des Ankunftselements das Profil eines Nutzers berücksichtigt.

5. Verfahren zur Navigation nach einem der vorhergehenden Ansprüche, **dadurch gekennzeichnet, dass** der Empfang eines Navigationsbefehls eine Verlagerung der grafischen Pfade auslöst, damit die grafische Unterscheidung, die das aktuelle Element hervorhebt, in ein- und demselben Anzeigebereich bleibt.

6. Verfahren zur Navigation nach einem der vorhergehenden Ansprüche, **dadurch gekennzeichnet, dass** die Ankunft beim letzten Element nach einer Navigation auf einer Liste einen neuen Schritt zur Auswahl(2.1) eines Ankunftselements auslöst, wobei das alte Ankunftselement zu dem Ausgangselement wird.

7. Verfahren zur Navigation nach einem der vorhergehenden Ansprüche, **dadurch gekennzeichnet, dass** der Schritt zum Anzeigen (2.4) darin besteht, auf dem Mittel zur Visualisierung (2) die Elemente auf Positionen zu platzieren, die abhängig sind von den Werten von Attributen, die mit jedem von ihnen verbunden sind, die Pfade anschließend grafisch so dargestellt werden, dass die Elemente ein- und derselben Liste verknüpft sind.

8. Elektronisches Gerät (1), umfassend ein Mittel zur Erzeugung eines Signals zum Anzeigen (3, 10) eines Menüs, das Identifikatoren von Elementen darstellt, die aus einer Gesamtheit von Elementen entnommen wurden, die in einer Datenbank (9) vorhanden sind, ein Mittel zum Empfang von Befehlen (7, 8), das es ermöglicht, die Verlagerung eines Cursors auf einem an das Mittel zur Erzeugung eines Anzeigesignals (3, 10) angeschlossenen Visualisierungsbildschirm zu steuern; ein Mittel zur Auswahl von zwei Elementen, die als das Ausgangselement und das Ankunftselement betrachtet werden, wobei das Mittel zur Erzeugung eines Anzeigesignals (3, 10) so viele Listen von Elementen anzeigt wie Attribute, die für die Ausgangs- und Ankunftselemente gemeinsam sind, wobei alle Elemente einer Liste dasselbe Attribut haben, das in die gemeinsamen Attribute der Ausgangs- und Ankunftselemente aufgenommen wurde, wobei die Listen von Elementen durch grafische Pfade angezeigt werden, deren Enden grafisch mit den Ausgangs- und Ankunftselementen verknüpft sind, wobei das Mittel zum Empfang von Befehlen (7,8) die Auswahl eines Pfades und die Navigation innerhalb des aus dem grafisch hervorgehobenen Ausgangselement ausgewählten Pfades ermöglicht.

9. Elektronisches Gerät (1) nach Anspruch 8, **dadurch gekennzeichnet, dass** das Mittel zur Erzeugung eines Anzeigesignals (3, 10) die Elemente der Listen auf jeden grafischen Pfad platziert, indem es sie nach einem Klassifikationskriterium anordnet.

10. Elektronisches Gerät (1) nach Anspruch 9, **dadurch gekennzeichnet, dass** das Mittel zur Erzeugung eines Anzeigesignals (3, 10) die Elemente von jeder Liste nach einem oder mehreren Klassifikationskriterien dergestalt platziert, dass das Ausgangselement und das Ankunftselement sich am Anfang und am Ende der angeordneten Liste befinden.

11. Elektronisches Gerät (1) nach einem der Ansprüche 8 bis 10, **dadurch gekennzeichnet, dass** das Mittel zur Auswahl des Ausgangselements und des Ankunftselements das Profil eines Nutzers berücksichtigt.

12. Elektronisches Gerät (1) nach einem der Ansprüche 8 bis 11, **dadurch gekennzeichnet, dass** das Mittel zum Empfang von Befehlen (7, 8) eine Verlagerung der grafischen Pfade auslöst, damit die grafische Unterscheidung, die das aktuelle Element hervorhebt, in ein- und demselben Anzeigebereich bleibt.

13. Elektronisches Gerät (1) nach einem der Ansprüche 8 bis 12, **dadurch gekennzeichnet, dass** die Ankunft beim letzten Element nach einer Navigation auf einer Liste das Mittel zur Auswahl aktiviert, wobei das Mittel zur Auswahl ein neues Ankunftselement festlegt, das alte Ankunftselement zum Ausgangselement wird.

14. Elektronisches Gerät (1) nach einem der Ansprüche 8 bis 13, **dadurch gekennzeichnet, dass** das Mittel zur Erzeugung eines Anzeigesignals (3, 10) die Elemente auf Positionen platziert, die abhängig sind von den Werten von Attributen, die mit jedem von ihnen verbunden sind, die Pfade anschließend grafisch so dargestellt werden, dass die Elemente ein- und derselben Liste verknüpft sind.

## Claims

1. Method for navigation in a set of elements, these elements being associated with attribute values fixed by classification criteria, said method comprising the steps of:
- selection (2.1) of two elements considered as the start element and the end element and determination (2.2) of attributes common to the two elements selected,
- elaboration (2.3) of as many lists of elements as attributes common to the start and end elements, all elements of a list having the same attribute taken in the common attributes,
- display (2.4) of graphic paths representing each list graphically connecting together the elements, the extremities of each path being graphically connected to the start and end elements,
- navigation in the set of paths (2.6, 2.7) consisting in graphically highlighting the start element, receiving a selection signal from one of the graphic paths, and in receiving navigation commands triggering the displacement within the graphic path selected from the start element.

2. Method for navigation according to claim 1; **characterized in that** the elements of the list are ordered on each graphic path according to a classification criterion.

3. Method for navigation according to claim 2; **characterized in that** the elements of lists are selected according to one or more classification criteria so that the start element and the end element are situated at the start and end of the ordered list.

4. Method for navigation according to any one of claims 1 to 3; **characterized in that** the step of selection of the start element and the end element take account of profile of a user.

5. Method for navigation according to any one of the preceding claims, **characterized in that** the reception of a navigation command triggers a displacement of graphic paths so that the graphic marker highlighting the current element remains in the same area of the display.

6. Method for navigation according to any one of the preceding claims, **characterized in that** the arrival at the last element after navigation in a list triggers a new selection step (2.1) of an end element, the old end element becoming the start element.

7. Method for navigation according to any one of the preceding claims, **characterized in that** the display step (2.4) consists in placing on the display means (2) the elements at positions that depend on the values of attributes associated with each of them, the paths are then graphically represented in a way to link the elements of the same list.

8. Electronic device (1) comprising a means for generation of a signal for a menu display (3, 10) presenting the element identifiers extracted from a set of elements present in the database (9), and a means of reception of commands (7, 8) enabling control of the displacement of a cursor on a display screen connected to the means of generation of a display signal (3, 10); a means of selection of two elements considered as the start element and the end element, the means of generation of a display signal (3, 10) displaying as many lists of elements as attributes common to the start and end elements, all the elements of a list having the same attribute taken in the common attributes, the lists of elements being displayed by graphic paths whose extremities are graphically connected to the start and end elements, the means of reception of commands (7, 8) enabling the selection of a path and the navigation within the path selected from the start element graphically highlighted.

9. Electronic device (1) according to claim 8; **characterized in that** the means for generation of a display signal (3, 10) places the elements of the list on each graphic path by ordering them according to a classification criterion.

10. Electronic device (1) according to claim 9; **characterized in that** the means for generation of a display signal (3, 10) places the elements of each list according to one or more classification criteria so that the start element and the end element are situated at the start and end of the ordered list.

11. Electronic device (1) according to any one of claims 8 to 10; **characterized in that** the means for selection of the start element and the end element take account of profile of a user.

12. Electronic device (1) according to any one of the preceding claims 8 to 11; **characterized in that** the means for reception of commands (7, 8) triggers a displacement of graphic paths so that the graphic marker highlighting the current element remains in the same area of the display.

13. Electronic device (1) according to any one of the preceding claims 8 to 12; **characterized in that** the arrival at the last element after navigation in a list activates the means for selection, the means of selection determining a new end element, the old end element before the start element.

14. Electronic device (1) according to any one of the claims 8 to 13; **characterized in that** the means for generation of a display signal (3, 10) places the elements at positions that depend on the values of attributes associated with each of them, the paths are then graphically represented in such a way as to link the elements of the same list.
